# EUROPEAN PATENT SPECIFICATION

(11) **EP 0 552 776 B1**
(45) Date of publication and mention of the grant of the patent: **06.12.1995**
(21) Application number: 93100916.1
(22) Date of filing: 21.01.1993
(51) Int. Cl.: B21H 1/04, B21H 5/02, B21D 53/26, B21D 53/28, F16H 55/44

(54) **Rolling process for forming pulleys with one or more V-grooves and with an integral phonic wheel**
Walzverfahren zur Herstellung von Riemenscheiben mit einer oder mehreren V-förmigen Rillen und mit einem integralen phonischen Rad
Procédé de roulage pour la fabrication de poulies à gorge unique ou multiple en forme de V et à roue phonique intégrale

(30) Priority: 24.01.1992 IT TO920050
(43) Date of publication of application: 28.07.1993
(73) Proprietor: AGLA S.p.A., I-10128 Torino (IT)
(72) Inventor: Bonu', Giacomo, I-10051 Avigliana (IT)
(74) Representative: Jorio, Paolo, Dr. Ing.

(56) References cited:
- EP-A- 0 156 567
- EP-A- 0 463 200
- EP-A- 0 517 572
- DE-A- 3 936 648
- DE-C- 3 711 927
- DE-U- 9 202 693
- GB-A- 2 135 421
- PATENT ABSTRACTS OF JAPAN vol. 6, no. 130 (M-143)16 July 1982 & JP-A-57 056 131 (YAMAKAWA KOGYO) 3 April 1982
- PATENT ABSTRACTS OF JAPAN vol. 11, no. 344 (M-640)11 November 1987 & JP-A-62 124 043 (AISIN SEIKO) % June 1987
- PATENT ABSTRACTS OF JAPAN vol. 12, no. 109 (M-682)8 April 1988 & JP-A-62 238 037 (NIPPON ISUEEDE) 19 October 1987

## Description

The present invention relates to a process for forming pulleys with one or more V-grooves and with an integral phonic wheel.

Pulleys of the said type are used, for example, in motor vehicles for connecting auxiliary members to the drive shaft by means of a transmission belt. The phonic wheel, formed integrally with the pulley, enables the angular velocity of the drive shaft to be detected and, if provided with at least one zone of discontinuity detectable by a sensor, enables the angular position thereof to be detected so as to enable an electronic injection system to be controlled.

In a known process, pulleys of the said type are formed by two distinct, successive operations: firstly the grooves (or the groove) are formed by a rolling process in an outer cylindrical surface of a substantially cup-shaped semi-finished product in its turn formed by pressing or rolling from a flat sheet-metal disc; subsequently the semi-finished product is transferred to a hammering machine which forms the toothing of the phonic wheel.

This process has various disadvantages. First of all, it is very burdensome in that it requires the use of at least two separate working stations or machines, one for the rolling of the grooves and the other for the toothing.

Furthermore, the quality of the finished product is not very good because of the poor-quality finish obtainable by the hammering; in particular the phonic wheel frequently has irregular axial surfaces and cutting edges which can be unacceptable in some applications and thus require further machining and, in any case, are dangerous during subsequent handling, for example during assembly on the vehicle.

Finally the formation of the toothing after the rolling results in a dimensional deterioration in the rolled portion because of the mechanical stresses due to the hammering.

EP-A 0 517 572, comprised in the state of the art according to Article 54(3) EPC, discloses a process for manufacturing multiple groove pulleys with an integrated phonic wheel, the process including the steps of roll-forming a cylindrical lateral wall provided with multiple grooves and an annular flange extending from an edge of the lateral wall, and the step of forming the toothed portion of the pulley by drawing the flange in a toothing device comprising a die unit and a punch member.

Therefore, also this latter process requires two different working stations; semi-finished pulleys must be removed from the roll-forming machine and transferred to the toothing device, which involves additional costs and time.

The object of the present invention is to provide a process for forming pulleys with multiple grooves and an integrated phonic wheel which is free from the disadvantages of the known processes specified above.

This object is achieved by the present invention in that it relates to a rolling process for forming a pulley with at least one peripheral groove and an integral phonic wheel, in which a substantially cup-shaped semi-finished product having a base wall and a substantially cylindrical lateral wall is rotated and subjected to successive rolling operations to deform at least the lateral wall plastically, the process including at least a first step of roughing the groove, a step of finishing the groove, and a step of forming toothing by roll-forming an annular portion of the lateral wall of the semi-finished product defined during the steps of roughing and finishing the groove.

In a preferred embodiment of the present invention the steps of the process are carried out in a single rolling machine; moreover, the step of finishing the groove or grooves and the step of forming the toothing are carried out simultaneously.

In order to provide a better understanding of the present invention, a preferred embodiment is described below, purely by way of non-limitative example and with reference to the appended drawings, in which:
Figure 1 is a schematic side elevational view of a rolling machine for carrying out the process according to the present invention, with parts removed for clarity;
Figure 2 is a section taken on the plane of the trace II-II in Figure 1;
Figure 3 is a radial section through a semi-finished product in an initial step of the process;
Figures 4, 5, 6 and 7 are radial sections showing respective steps in the working of a pulley by the process of the invention and showing the profiles of the respective rolls used in these steps.

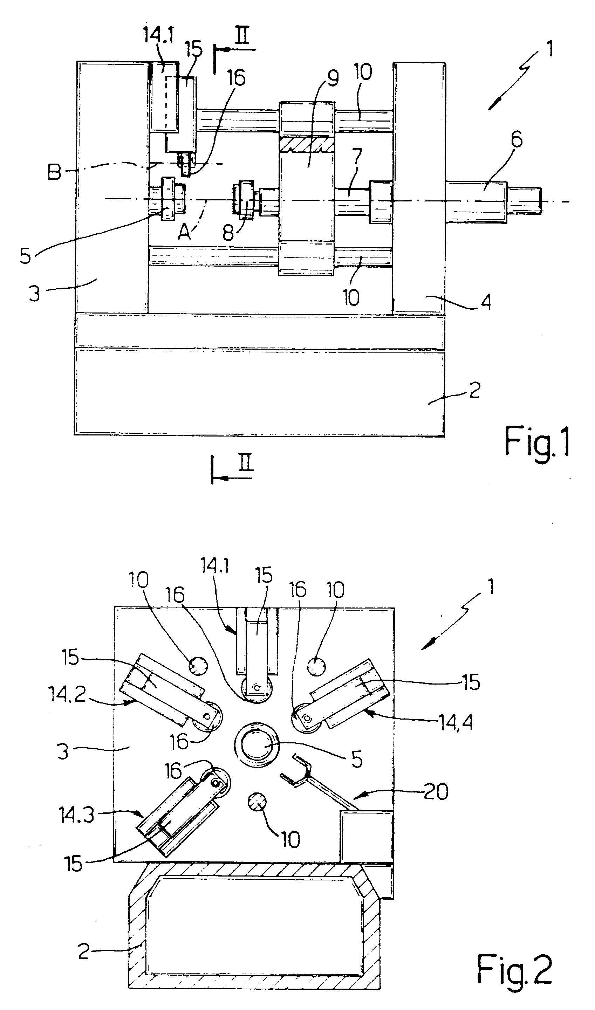

With reference to Figures 1 and 2, a rolling machine for carrying out the process of the present invention is generally indicated 1.

The machine 1 includes essentially a base 2 from opposite ends of which arise a first head 3 and a second head 4.

The head 3 supports a mandrel 5 which is fixed in the axial sense but is rotatably coupled to drive means, not illustrated, through transmission means of conventional type; the mandrel 5 may thus rotate about a horizontal axis A.

The head 4 supports an hydraulic cylinder 6 coaxially of the mandrel 5; the latter has an axially slidable shaft 7 which carries a second mandrel 8 at its end facing the mandrel 5, the mandrel 8 being movable axially with the shaft 7 and freely rotatable thereon.

A slide 9 is also fixed rigidly to the shaft 7 and is slidable axially along three guide columns 10 which extend parallel to the axis of the cylinder 6 and are supported at their respective ends by the heads 3 and 4. These columns, located one below the cylinder 6 and two above it and on opposite sides thereof, constitute a guide for the shaft 7 and absorb the radial loads to which it is subject due to its own weight and due to the working operations, as will be clarified below.

The head 3 further supports a plurality of operating heads disposed in a circumferential array around the fixed mandrel 5; there are conveniently four of these heads and these are indicated 14.1, 14.2, 14.3 and 14.4 respectively. Each head includes a respective carriage 15 movable in a radial direction (relative to the axis A) by drive means not illustrated; each carriage 15 may carry a respective roll 16 which is freely rotatable about an axis B parallel to the axis A and has a suitable working profile.

More particularly, the head 14.1 is located between the upper columns 10 with its axis vertical; the heads 14.2 and 14.4 are located outside these columns 10 and symmetrically relative to the axis of the head 14.1; finally, the head 14.3 is located in a position approximately opposite the head 14.4 relative to the mandrel 5.

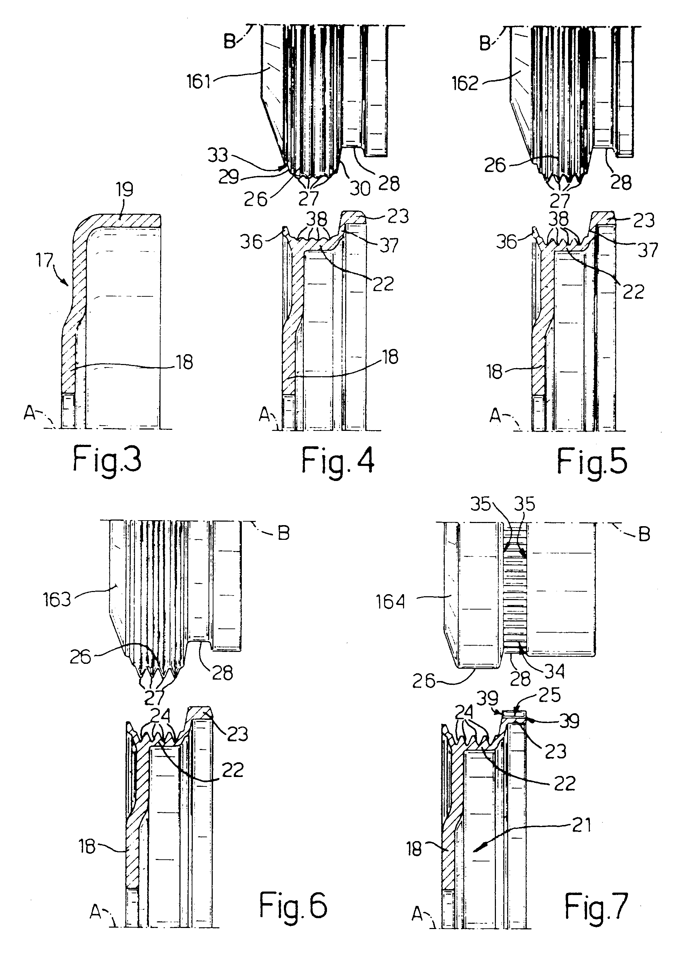

In Figure 3, part of a semi-finished (axially symmetric) product 17 for the formation of a pulley with multiple grooves and an integral phonic wheel according to the invention is illustrated in radial section.

The semi-finished product 17 is obtained from a preliminary drawing operation carried out on a flat sheet-metal disc and has a circular base wall 18, which conveniently has a central aperture, and an outer cylindrical wall 19, the walls being connected to each other.

In use, the semi-finished product 17 is supplied to the machine 1 by a manipulator 20 which is adapted to take it from a supply chute, not illustrated, and to position it on the mandrel 5. The base wall 18 of semi-finished product 17 is then gripped frictionally between the mandrels 5 and 8 by the action of the hydraulic cylinder 6; the mandrel 5 is rotated and the rolls 16 of the various heads 14 are brought successively and/or simultaneously into contact with the cylindrical wall 19 as described below.

Figures 4 et seq illustrate in detail the various rolling steps by which the semi-finished product 17 is transformed into the finished pulley, indicated 21 in Figure 7.

The finished pulley has an annular wall defined by two portions 22, 23, of smaller and larger diameter respectively, in which a plurality of adjacent V-grooves 24 and toothing 25 are formed. The portion 22 is adapted to receive a transmission belt having a corresponding profile in use; the toothed portion 23 constitutes a phonic wheel for the detection of the angular velocity of a shaft, for example a drive shaft of a vehicle, to which the pulley may be keyed in use.

In each of the said steps, a roll 16 having a suitable working profile is used. Each of these rolls is indicated by the numeral 16 followed by an index numeral equal to that of the respective head 14 on which it is mounted.

With reference to Figure 4, the roll 16.1, or first roughing roll, has a working profile defined in section by a first raised portion 26 having a plurality of undulations 27 in section and by a second recessed portion 28 having a trapezoidal profile in section with connected corners. The portion 26 is bounded laterally by respective inclined sides 29, 30 which converge towards the undulations 27.

The side 29, located on the opposite side from the second portion 28, has a smaller extent and terminates at its edge nearer the roll axis in a substantially cylindrical step 33. The side 30 has a greater extent and constitutes essentially an elongation of a side of the portion 28.

The roll 16.2, or second roughing roll, has a profile substantially like that of the roll 16.1, the essential difference being that the undulations 27 of the first portion 26 are more marked and consist essentially of V-shaped projections with the grooves and crests having rounded profiles.

The roll 16.3 or multiple-groove finishing roll, has a profile which is again like that of the preceding rolls from which it differs in that the undulations are in this case replaced by a profile complementary to that of the multiple V-grooves it is wished to obtain.

The roll 16.4, or toothing roll, has a cylindrical portion 26 which is rebated relative to the homologous portions of the preceding rolls so that, during working, it does not come into contact with the corresponding portion of the pulley; the portion 28 of the roll 16.4 instead has recessed toothing 34, complementary to that which it is wished to form in the pulley; the toothing 34 is defined axially by respective flat sides 35.

The succession of rolling steps is as follows.

Firstly, the head 14.1 is actuated. The roll 16.1, brought into contact with the cylindrical wall 19 of the semi-finished product 16, deforms it plastically and defines the portions 22 and 23; more particularly, the portion 22 is formed between a first axial shoulder 36 of smaller height and a second axial shoulder 37 of greater height, these diverging outwardly from each other. The portion 23 projects axially from an outer periphery of the shoulder 37 and, in this step, has a trapezoidal section with rounded corners of a shape complementary to that of the recessed portion 28 of the roll 16.1. Undulations 38 with rounded profiles are formed in the portion 22 complementary to the undulations 27 of the roll 16.1.

Next the roll 16.2 is actuated and essentially accentuates the depth of the undulations 38 and starts to define the flat sides of the V-shapes.

Finally, the rolls 16.3 and 16.4 are actuated simultaneously. These rolls, as defined above, are substantially opposite each other and hence act simultaneously on diametrally, or almost diametrally, opposite portions of the piece being worked.

The roll 16.3 finishes the grooves 24; the disc 16.4 forms the toothing on the portion 23 constituting the phonic wheel and makes the axial surfaces 39, started by the sides 35 of the toothed portion 28 of the roll 16.4, flat and parallel.

From an examination of the process described, carried out in accordance with the present invention, the advantages obtained are clear.

Above all, the formation of the grooves and the toothing of the phonic wheel are achieved in a single machine with a great saving in costs of the machinery and with a considerable reduction in the time and the cost of the working cycle, intermediate movements of the piece being worked being eliminated.

Furthermore, since the final two steps in the process (finishing of the grooves and toothing) are carried out simultaneously, high dimensional precision and optimum levels of finishing both of the grooves and of the phonic wheel are achieved since the flow of material caused by one of the steps does not deform the portion of the pulley finished during the other step, this latter being in contact with the respective roll. The opposed, or almost opposed, position of the rolls 16.3 and 16.4 also contributes to optimising the dimensional tolerances by reducing the resultant of the radial loads on the piece being worked.

Finally, the toothing roll, as well as forming the toothing, finishes the axial surfaces of the phonic wheel, eliminating geometrical irregularities and sharp, cutting edges.

Finally it is clear that modifications and variations may be made to the process described.

In particular, the process may be used to form pulleys with a single peripheral V-groove by changing the profiles of the rolls appropriately.

Moreover, the semi-finished starting product may be obtained by rolling instead of by drawing; the steps of roughing the grooves may be carried out in a single step or in more than two steps according to the depth and profile of the grooves which it is wished to form. Finally whenever the step of finishing the grooves and forming the toothing require different periods of time, the shorter of the said steps may be carried out simultaneously with the final part of the longer of the steps.

## Claims

1. A rolling process for forming a pulley (21) having at least one peripheral groove (24) and an integral phonic wheel (23), in which a substantially cup-shaped semi-finished product (17) having a base wall (18) and a substantially cylindrical lateral wall (19) is rotated and subjected to successive rolling operations to deform at least the lateral wall (19) plastically, the process including at least a first step of roughing the groove (38), a step of finishing the groove (24), and a step of forming toothing by roll-forming an annular portion (23) of the lateral wall (19) of the semi-finished product (17) defined during the steps of roughing and finishing the groove (38, 24).

2. A process according to Claim 1, characterised in that the steps of the process are carried out in a single rolling machine (1).

3. A process according to Claim 2, characterised in that the step of finishing the groove (24) and the step of forming toothing are carried out at least partly simultaneously.

4. A process according to Claim 3, characterised in that the steps of finishing the groove (24) and forming the toothing are carried with two rolls (16.3; 16.4) which cooperate with the semi-finished product (17) in substantially opposite positions.

5. A process according to any one of the preceding claims, characterised in that the step of forming toothing is carried out by means of a roll (16.4) having recessed toothing (34) bounded axially by respective flat sides (35) for defining respective flat axial surfaces (39) of the phonic wheel (23, 25).

6. A process according to any one of the preceding claims, characterised in that it includes a second roughing step between the said roughing step and the said step of finishing the groove (38; 24).

7. A process according to any one of the preceding claims, characterised in that the steps of roughing and finishing are adapted to form a plurality of V-grooves (24).

## Patentansprüche

1. Rollverfahren zur Herstellung einer Riemenscheibe (21) mit mindestens einer umfangsmäßigen Rolle (24) und einem zugehörigen phonischem Rad (23), wobei ein im wesentlichen tassenförmiges halbfertiges Produkt (17) mit einer Bodenwand (18) und einer im wesentlichen zylindrischen Seitenwand (19) gedreht und sukzessiver Bearbeitung durch Rollen ausgesetzt wird, um wenigstens die Seitenwand (19) plastisch zu deformieren, wobei wenigstens in einem ersten Schritt die Grobrille (38) vorgefertigt und in einem Schritt daraus die Fertigrille (24) erstellt wird und in einem Schritt während der Grob- und Fertigstellung der Rillen (38,24), die Verzahnung durch Rollen eines Ringbereichs (23) der Seitenwand (19) des halbfertigen Produkts (17) erzeugt wird.

2. Verfahren nach Anspruch 1, **dadurch gekennzeichnet**, daß die Herstellungsschritte in einer einzigen Rollmaschine (1) ausgeführt werden.

3. Verfahren nach Anspruch 2, **dadurch gekennzeichnet**, daß die Fertigstellung der Rillen (24) und das Formen der Verzahnung wenigstens teilweise gleichzeitig erfolgt.

4. Verfahren nach Anspruch 3, **dadurch gekennzeichnet**, daß die Fertigstellung der Rillen (24) und die Formung der Verzahnung mit zwei Rollen (16.3; 16.4) erfolgt, die mit dem halbfertigen Produkt (17) aus im wesentlichen gegenüberliegenden Positionen zusammenwirken.

5. Verfahren nach einem der vorangegangenen Ansprüche, **dadurch gekennzeichnet**, daß die Formung der Verzahnung durch eine Rolle (16.4) erfolgt, welche eine Verzahnungsausnehmung (34) aufweist, die axial durch entsprechende flache Seiten (35) begrenzt ist, zur Herstellung entsprechend flacher Axialflächen (39) des phonischen Rades (23,25).

6. Verfahren nach einem der vorangegangenen Ansprüche, **dadurch gekennzeichnet**, daß es einen zweiten Vorfertigungsschritt zwischen dem Schritt der Grobfertigung und vor dem Fertigstellungsschritt der Rillen (38,24) enthält.

7. Verfahren nach einem der vorangegangenen Ansprüche, **dadurch gekennzeichnet**, daß die Schritte Grobformung und Fertigformung zur Herstellung einer Vielzahl von V-förmigen Rillen (24) angewandt werden.

## Revendications

1. Procédé de roulage pour former une poulie (21) présentant au moins une rainure périphérique (24) et une roue phonique monobloc (23), dans lequel un produit semi-fini globalement cupuliforme (17) qui présente une paroi de base (18) et une paroi latérale globalement cylindrique (19) est mis en rotation et soumis à différentes opérations de roulage afin de déformer plastiquement au moins la paroi latérale (19), le procédé comprenant au moins une première étape de dégrossissage de la rainure (38), une étape de finition de la rainure (24) et une étape de formation d'une denture par roulage d'une partie annulaire (23) de la paroi latérale (19) du produit semi-fini (17) définie pendant les étapes de dégrossissage et de finition de la rainure (38, 24).

2. Procédé selon la revendication 1, caractérisé en ce que les étapes du procédé sont réalisées dans une seule machine à rouler (1).

3. Procédé selon la revendication 2, caractérisé en ce que l'étape de finition de la rainure (24) et l'étape de formation de la denture sont réalisées au moins partiellement de manière simultanée.

4. Procédé selon la revendication 3, caractérisé en ce que les étapes de finition de la rainure (24) et de formation de la denture sont réalisées avec deux rouleaux (16.3; 16.4) qui agissent en coopération avec le produit semi-fini (17) en des positions globalement opposées.

5. Procédé selon l'une des revendications précédentes, caractérisé en ce que l'étape de formation de la denture est réalisée au moyen d'un rouleau (16.4) qui présente une denture en creux (34) bordée axialement par des bords plats (35) respectifs qui définnissent des surfaces axiales plates respectives (39) sur la roue phonique (23, 25).

6. Procédé selon l'une des revendications précédentes, caractérisé en ce que celui-ci comprend une seconde étape de dégrossissage entre ladite étape de dégrossissage et ladite étape de finition de la rainure (38, 24).

7. Procédé selon l'une des revendications précédentes, caractérisé en ce que les étapes de dégrossissage et de finition permettent de former plusieurs rainures en V (24).
